# EUROPEAN PATENT SPECIFICATION

(11) **EP 1 870 320 B1**
(45) Date of publication and mention of the grant of the patent: **18.11.2009**
(21) Application number: 07110560.5
(22) Date of filing: 19.06.2007
(51) Int. Cl.: B62D 35/00

(54) **System for completely closing the space between the cab and semi-trailer of an industrial or commercial vehicle, to improve the aerodynamics of the vehicle**
System zur kompletten Füllung des Raums zwischen dem Führerhaus und dem Sattelauflieger eines Industrie- oder Nutzfahrzeugs zur Verbesserung der Aerodynamik des Fahrzeugs
Système de fermeture complète de l'espace entre la cabine et le semi-remorque d'un véhicule industriel ou commercial, pour améliorer l'aérodynamique du véhicule

(30) Priority: 20.06.2006 IT MI20061177
(43) Date of publication of application: 26.12.2007
(73) Proprietor: IVECO S.p.A., 10156 Torino (IT)
(72) Inventor: Guariento, Dario, 10022 Carmagnola (IT); Posenato, Giovanni, 10071 Borgaro Torinese (IT); Lupo, Filippo Maria, 80038 Pomigliano D'Arco (IT); Consano, Ludovico, 10023 Chieri (IT)
(74) Representative: Borsano, Corrado

(56) References cited:
- WO-A-2006/091147
- US-A- 3 711 146
- US-A- 4 036 519
- US-A- 4 611 847
- US-A- 4 746 160

## Description

The present invention relates to a system for completely closing the space between the cab and semi-trailer of an industrial or commercial vehicle, to improve the aerodynamics of the vehicle.

The energy efficiency of motor vehicles is known to be directly related to the aerodynamic drag and turbulence caused by the motion of the vehicle.

Efficiency in fuel consumption has become a paramount concern in view of increasing fuel costs and overall fuel usage, also due to problems associated with pollution.

These requirements are even more important in the case of large vehicles, such as industrial and commercial vehicles. The aerodynamic performance of the majority of these vehicles is reduced due to their overall shape, for instance the flat-faced frontal area of the cab, or the parts of the trailer, or semi-trailer, in case of articulated vehicles, which are square.

As the vehicle moves, a significant amount of air turbulence is produced, especially to the rear of the vehicle, which results in increased aerodynamic drag and leads to higher fuel consumption. This phenomenon increases in proportion to the speed of the vehicle, reaching particularly high levels on roads where vehicles can travel at high speeds, such as motorways.

The reduced aerodynamic efficiency of these vehicles is partly due to the fact that air flows through the space between the cab and semi-trailer, in case of articulated vehicles. This airflow is in opposition to the correct airflow, which should go over the outer surface of the vehicle.

Solutions aimed at solving this problem are known in the prior art.

One solution of these consists in mounting an air deflector on the roof of the cab, to redirect the air, at least partially, over the top of the trailer, which is usually higher than the cab. This prevents the air from breaking on the forward face of the trailer.

Another solution consists of attaching rigid spoilers to both sides and the top of the rear profile of the cab.

WO 2006/091147 discloses a system according to the preamble of claim 1 with an air deflection arrangement which can be adjusted when the vehicle is in motion. The prior art document describes a system comprising a plurality of air deflector suitable to be adjusted by a computer as a function of the vehicle speed, but the air deflectors do not provide a complete closure of the space between the cab and the trailer.

US 4,611,847 discloses an inflatable and extendable vehicle skirt, suitable to reduce the air drag caused by a moving motor vehicle such as a truck. The skirt is normally rolled up because it is made by a deformable material, and it is positioned at the rear part of the trailer, protruding downward.

However, these systems only partially solve the problem of reducing aerodynamic drag, in that the air can still flow through the space between the cab and trailer. Therefore the purpose of the present invention is to solve the problems described above with a system for completely closing the space between the cab and semi-trailer of an industrial or commercial vehicle, to improve the aerodynamics of the vehicle.

According to the main embodiments of the present invention, the space between the tractor cab and semi-trailer is closed by means of dynamic inflatable and retractable extensions (referred to hereafter as "inflatable spoilers"). Due to their particular geometric conformation and the material used, the inflatable spoilers dynamically adjust to the profile of the semi-trailer, during vehicle manoeuvring or more generally in conditions of relative motion between said tractor and semi-trailer.

This solution eliminates the contribution to aerodynamic drag generated by that portion of the airflow that would otherwise circulate in the space between the cab and semi-trailer. It should also be noted that this contribution is particularly significant in case of side winds, a condition that is statistically highly probable.

The present invention relates to a system for completely closing the space between the cab and semi-trailer of an industrial or commercial vehicle, comprising rigid spoilers attached to the side and top edges of the rear of the cab, **characterized in that** it also comprises inflatable and retractable spoilers, attached to said rigid spoilers as dynamic extensions thereof, and suitable to extend so as to adhere to the front wall of the semi-trailer and completely close the space between the cab and semi-trailer.

According to an alternative embodiment the system also comprises a rounded abutment surface as an extension of the front wall of the semi-trailer, suitable for facilitating the contact with said inflatable spoilers.

It is particular object of the present invention, a system for completely closing the space between the cab and semi-trailer of an industrial or commercial vehicle, to improve the aerodynamics of the vehicle, as better described in the claims, which are an integral part of this description.

Further purposes and advantages of this invention will become clear from the following detailed description of a preferred embodiment (and the relative alternative embodiments), and the drawings that are attached hereto, which are merely illustrative and not limitative, in which:

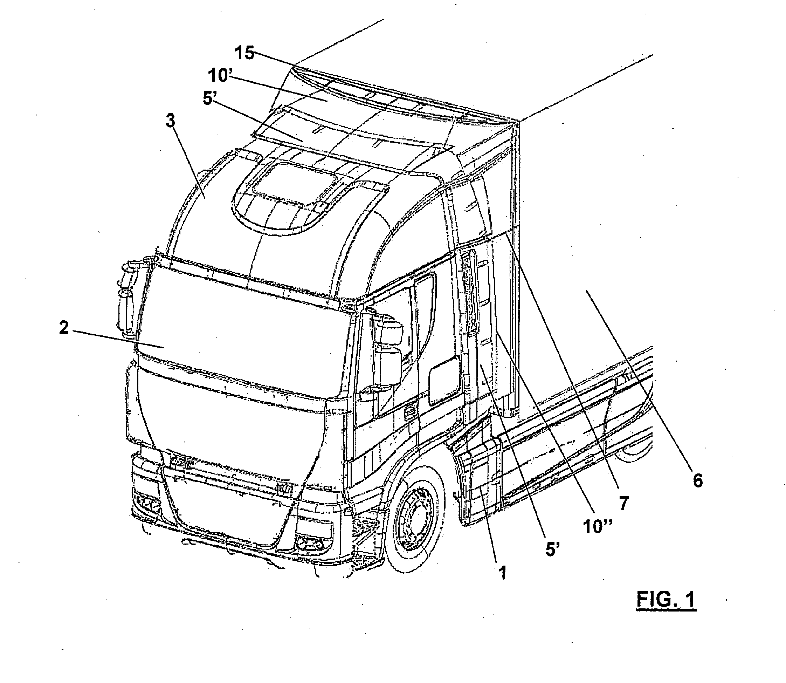

figure 1 is a cutaway view of a vehicle comprising the system according to the present invention;

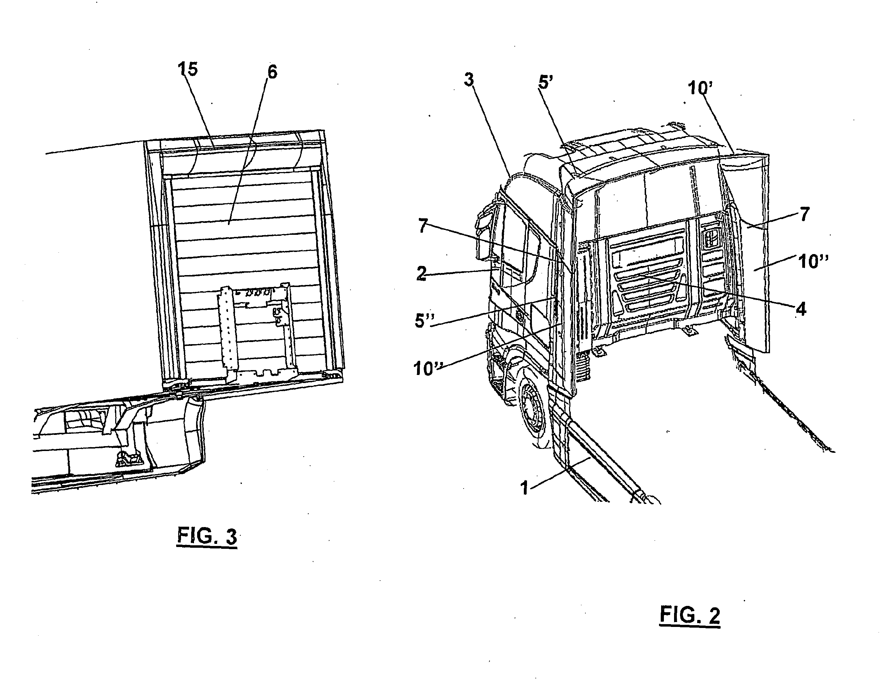

figure 2 is a cutaway view of the part of the system attached to the vehicle cab;
figure 3 is a cutaway view of the part of the system attached to the semi-trailer of the vehicle;

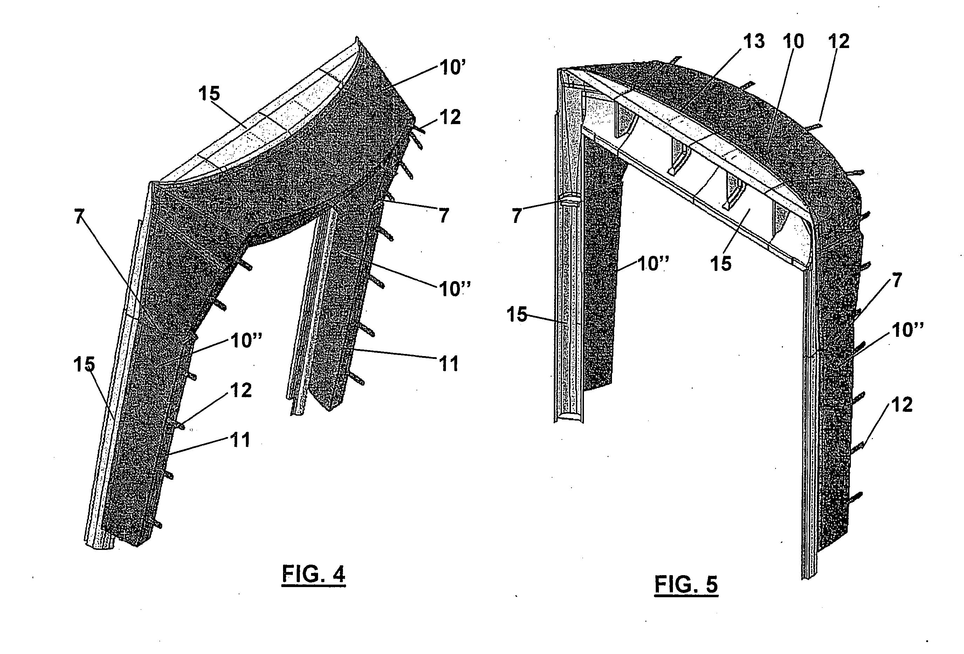

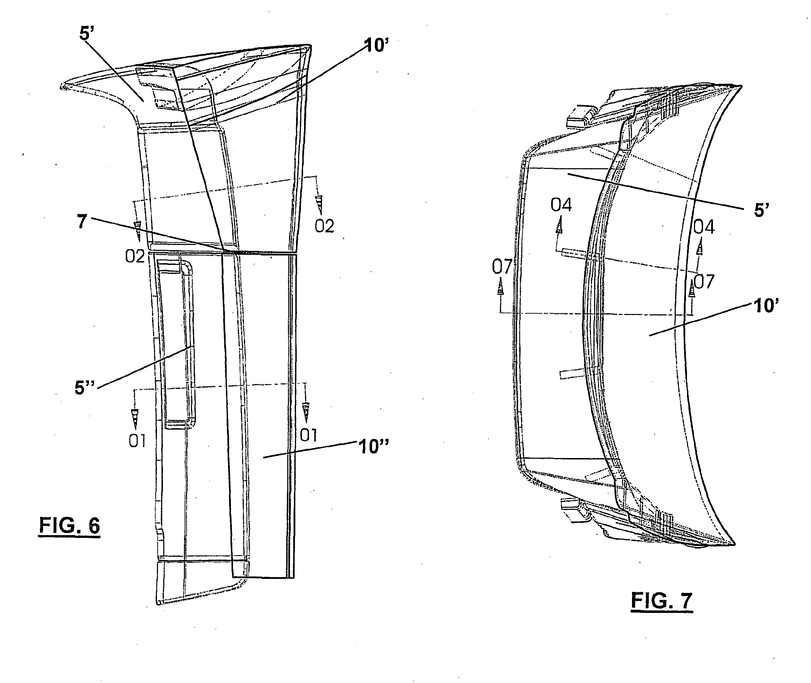

figures 4 to 7 are views from different perspectives of the system according to the invention;

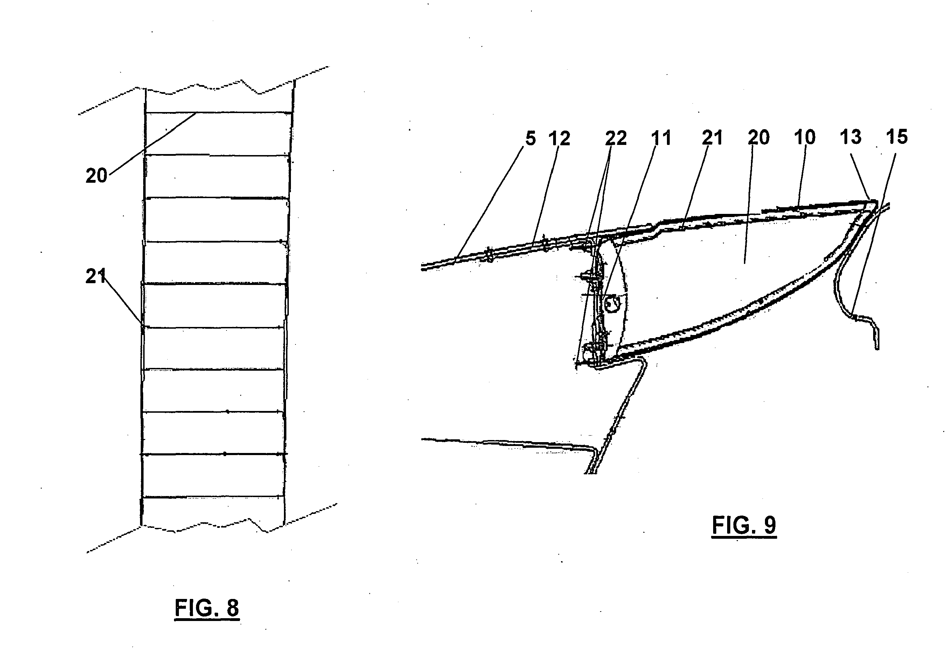

figures 8 and 9 are, respectively, longitudinal and cross-sections of the inflatable spoiler part.

In the drawings the same reference numbers and letters are used to indicate the same parts or components.

According to the invention, the inflatable spoilers close the space between the cab and semi-trailer dynamically, so as to adapt to the vibrations and to the relative movements, which may even be rapid, when the vehicle is travelling.

They are preferably divided into three parts, a top part and two side parts, also to enable at least one of the two side parts to be opened to allow access to the space between the cab and semi-trailer.

The invention is now described with reference to the non-limiting example illustrated in the drawings.

The drawings show partial views of a tractor 1, with relative cab 2. In the non-limiting example described here, an air deflector 3 is mounted on the roof of the cab, but this part may not be present, depending on the specific type of tractor.

Rigid spoilers 5 are attached directly to the rear part 4 of the cab, around the side and top edges of the rear of said cab and of the deflector 3, where present. The rigid spoilers 5 are divided into three parts, along the dividing lines 7: a top part 5', fitted around the deflector 3, if present, or the roof of the cab, and two side parts 5" on the two sides of the cab. At least one of these side parts 5" can be mounted by hinges to the cab so that it can be opened like a door to allow access to the space between the cab 2 and semi-trailer 6.

The rigid spoilers 5 extend towards the semi-trailer 6 for a given width, so as to leave a free gap.

Inflatable spoilers 10 are attached to the rigid spoilers 5, said inflatable spoilers 10 also being divided into three parts, along the same division lines 7 of the rigid spoilers: a top part 10' which is an extension of the top part 5' of the rigid spoiler, and two side parts 10" which are extensions of the side parts 5" of the rigid spoiler. Thus at least one of the two side parts 10" of the inflatable spoilers can be opened together with the corresponding part 5" of the rigid spoiler, since it is integral therewith.

The inflatable spoilers 10 comprise a rigid internal support 11, made, for instance, of aluminium, which also acts as a container for the inflatable spoiler 10 when the latter is deflated and retracted. The internal support 11 is attached to the rigid spoiler 5 by means of metal side brackets 12. The internal support 11 extends in a direction that is essentially perpendicular to that of the rigid spoilers 5.

In general the cross-section of the inflatable spoiler 10 corresponds to a given width of the internal support 11, growing thinner until shaping to a point 13 towards the outer edge facing the semi-trailer 6, thus assuming a triangle-like shape.

The profile of the surface of the front wall of the semi-trailer 6 may be provided with an extension in the form of a rounded abutment surface 15, comprising rigid front adapters, for instance made of plastic, for example semi-cylindrical in shape. However, said rounded surface need not necessarily be present.

The rounded abutment surface 15 is suitable to allow a correct contact with the edge 13 of the inflatable spoilers 10. However the latter can adapt to different types of semi-trailers, whether provided with a front adapter or not. This characteristic is useful, for example, for optimizing fleet management, when one tractor can be used with different semi-trailers.

The inflatable spoilers 10 comprise a non-rigid, inflatable and retractable part, for example made of PVC sheet, with a smooth outer surface facing the outside of the vehicle to improve the aerodynamic efficiency of the vehicle. When inflated, the required geometry of the spoiler is maintained by means of internal sector cross-pieces 20. More specifically, a series of heat-sealed flaps 21 are attached transversely to the inside edges of the non-rigid part, said flaps possibly being made of the same material as said non-rigid part. Respective series of cross-pieces 20, made of a less rigid and thinner material than the outer surfaces, are stitched transversely to these flaps 21, so as to facilitate retraction and folding when the inflatable spoilers 10 are deflated.

The inflatable spoilers are operated by means of an inflating and packing/retracting system that must guarantee continuous (re)inflation and (re)deflation so that when the inflatable structure extends it comes into contact with the semi-trailer 6, and with the front adapter 15 if present, in the correct position, so as to fit properly and not "stick" in an wrong position.

For this purpose a series of tie elements 22 are attached to the outer and inner surfaces of the sides of the inflatable spoilers, said tie elements being operated in a suitable way and acting, starting from the end 13 of the spoiler, to pull it back and fold it closed, and re-open it in a perpendicular direction, forcing it into the desired geometry when inflated.

The method of inflation can use a system known in the prior art, for example comprising ordinary pumps that inflate and deflate the inflatable spoilers, governed by a control system that also controls the stays on the side surfaces of the inflatable spoilers.

The spoilers are inflated at a pressure sufficiently higher than the atmospheric pressure, so as to remain in the extended condition. They are deflated at a pressure lower than the atmospheric pressure and maintained in this condition, so as to remain folded on the internal supports 11, occupying as little space as possible.

It will be apparent to the person skilled in the art that other alternative and equivalent embodiments of the invention can be conceived and reduced to practice without departing from the invention.

From the description set forth above it will be possible for the person skilled in the art to embody the invention without introducing any further construction details.

## Claims

1. System for completely closing the space between the cab and semi-trailer of an industrial or commercial vehicle, comprising rigid spoilers (5) attached to the side and top edges of the rear of the cab,
comprising
inflatable and retractable spoilers (10), attached to said rigid spoilers (5) as dynamic extensions thereof, and suitable to extend so as to adhere to the front wall (4, 15) of the semi-trailer and completely close the space between the cab and semi-trailer, **characterized in that** it further comprises:
- a rigid internal support (11) attached to said rigid spoiler (5), and extending in a direction that is essentially perpendicular to said rigid spoiler;
- an inflatable and retractable part (10, 13, 20, 21, 22), attached to said internal support (11), said internal support being suitable to essentially contain said inflatable and retractable part when retracted, said inflatable and retractable part, when extended, having a pointed tip (13) that comes into contact with said front wall (4, 15) of the semi-trailer.

2. System according to claim 1, **characterized in that** it also comprises a rounded supporting surface (15) as an extension of said front wall (4) of the semi-trailer, suitable to facilitate the contact with said inflatable spoilers (10).

3. System according to claim 2, **characterized in that** said rounded supporting surface (15) comprises rigid front adapters, for instance made of plastic and for example semi-cylindrical in shape.

4. System according to claim 1, **characterized in that** said rigid spoilers (5) and said inflatable spoilers (10) are divided into a top part (5', 10') and two side parts (5", 10"), it being possible to open at least one of said side parts.

5. System according to one or more of the preceding claims, **characterized in that** said inflatable and retractable part is provided with internal sector cross-pieces (20), attached transversely to the inside edges of said inflatable part, suitable to maintain said inflatable part in the desired shape when extended.

6. System according to claim 5, **characterized in that** said sector cross-pieces (20) are attached to the inside edges of said inflatable part by means of flaps (21) that are heat-sealed to said inside edges, said sector cross-pieces (20) being stitched to said flaps (21).

7. System according to one or more of the preceding claims, **characterized in that** said internal support (11) is attached to said rigid spoiler (5) by means of metal side brackets (12).

8. System according to claim 1, **characterized in that** said inflatable and retractable part is made of PVC sheet, the outer surface of which facing the outside of the vehicle is smooth.

## Patentansprüche

1. System zum vollständigen Schließen des Raums zwischen der Kabine und einem Auflieger eines industriellen oder kommerziellen Fahrzeugs, umfassend feste Abdeckungen (5), die an den seitlichen und oberen Kanten der Rückseite der Kabine angebracht sind, umfassend
aufblasbare und einziehbare Abdeckungen (10), die an den festen Abdeckungen (5), als dynamische Erweiterung davon angebracht und geeignet sind, sich zu erweitern, um an der Vorderwand (4, 15) des Aufliegers anzuliegen und den Raum zwischen der Kabine und dem Auflieger vollständig zu schließen, **dadurch gekennzeichnet, dass** es ferner umfasst:
- eine feste innere Halterung (11), die an der festen Abdeckung (5) angebracht ist und sich in einer Richtung erstreckt, die im Wesentlichen senkrecht zu der festen Abdeckung ist;
- einen aufblasbaren und einziehbaren Teil (10, 13, 20, 21, 22), der an der inneren Halterung (11) angebracht ist, wobei die innere Halterung geeignet ist, im Wesentlichen den aufblasbaren und einziehbaren Teil zu enthalten, wenn er eingezogen ist, wobei der aufblasbare und einziehbare Teil eine zugespitzte Spitze (13) aufweist, wenn er erweitert ist, die in Kontakt mit der Vorderwand (4, 15) des Aufliegers kommt.

2. System nach Anspruch 1, **dadurch gekennzeichnet, dass** es auch eine abgerundete Halteoberfläche (15) als eine Erweiterung der Vorderwand (4) des Aufliegers aufweist, die geeignet ist, den Kontakt mit den aufblasbaren Abdeckungen (10) zu erleichtern.

3. System nach Anspruch 2, **dadurch gekennzeichnet, dass** die abgerundete Halteoberfläche (15) feste Vorderadapter aufweist, die zum Beispiel aus Kunststoff gemacht sind und zum Beispiel eine halbzylindrische Form aufweisen.

4. System nach Anspruch 1, **dadurch gekennzeichnet, dass** die festen Abdeckungen (5) und die aufblasbaren Abdeckungen (10) in einen Oberteil (5', 10') und zwei Seitenteile (5", 10'') aufgeteilt sind, wobei es möglich ist, zumindest einen der Seitenteile zu öffnen.

5. System nach einem oder mehreren der vorstehenden Ansprüche, **dadurch gekennzeichnet, dass** der aufblasbare und einziehbare Teil mit inneren Sektor-Querstücken (20) versehen ist, die quer an der Innenkante des aufblasbaren Teils angebracht sind, die dazu geeignet sind, den aufblasbaren Teil in der gewünschten Form zu erhalten, wenn er erweitert ist.

6. System nach Anspruch 5, **dadurch gekennzeichnet, dass** die Sektor-Querstücke (20) an den Innenkanten des aufblasbaren Teils durch Klappen (21) angebracht sind, die an die Innenkanten hitzegesiegelt sind, wobei die Sektor-Querstücke (20) an die Klappen (21) angeheftet sind.

7. System nach einem oder mehreren der vorgehenden Ansprüche, **dadurch gekennzeichnet, dass** die innere Halterung (11) an der festen Abdeckung (5) durch Metallseitenklammern (12) angebracht ist.

8. System nach Anspruch 1, **dadurch gekennzeichnet, dass** der aufblasbare und einziehbare Teil aus einer PVC-Schicht gemacht ist, deren äußere Oberfläche, die der Außenseite des Fahrzeugs zugewandt ist, glatt ist.

## Revendications

1. Système pour fermer entièrement l'espace entre la cabine et la semi-remorque d'un véhicule industriel ou utilitaire, comportant des déflecteurs rigides (5) fixés sur les bords latéraux et supérieurs de l'arrière de la cabine,
comportant
des déflecteurs gonflables et rétractables (10), fixés sur lesdits déflecteurs rigides (5) en tant qu'extensions dynamiques de ceux-ci, et adaptés pour s'étendre de manière à adhérer à la paroi avant (4, 15) de la semi-remorque et à fermer entièrement l'espace entre la cabine et la semi-remorque, **caractérisé en ce qu'**il comporte en outre :
- un support intérieur rigide (11) fixé sur ledit déflecteur rigide (5), et s'étendant dans une direction qui est sensiblement perpendiculaire audit déflecteur rigide,
- une partie gonflable et rétractable (10, 13, 20, 21, 22), fixée sur ledit support intérieur (11), ledit support intérieur étant adapté pour contenir essentiellement ladite partie gonflable et rétractable lorsqu'elle est rétractée, ladite partie gonflable et rétractable, lorsqu'elle est étendue, ayant une extrémité pointue (13) qui vient en contact avec ladite partie avant (4, 15) de la semi-remorque.

2. Système selon la revendication 1, **caractérisé en ce qu'**il comporte également une surface d'appui arrondie (15) en tant qu'extension de ladite paroi avant (4) de la semi-remorque, adaptée pour faciliter le contact avec lesdits déflecteurs gonflables (10).

3. Système selon la revendication 2, **caractérisé en ce que** ladite surface d'appui arrondie (15) comporte des adaptateurs avant rigides, par exemple constitués de matière plastique et par exemple de forme semi-cylindrique.

4. Système selon la revendication 1, **caractérisé en ce que** lesdits déflecteurs rigides (5) et lesdits déflecteurs gonflables (10) sont divisés en une partie supérieure (5', 10') et deux parties latérales (5", 10"), au moins une desdites parties latérales pouvant être ouverte.

5. Système selon une ou plusieurs des revendications précédentes, **caractérisé en ce que** ladite partie gonflable et rétractable est munie d'éléments transversaux de secteur intérieurs (20), fixés transversalement aux bords intérieurs de ladite partie gonflable, adaptés pour maintenir ladite partie gonflable dans la forme voulue lorsqu'elle est étendue.

6. Système selon la revendication 5, **caractérisé en ce que** lesdits éléments transversaux de secteur (20) sont fixés sur les bords intérieurs de ladite partie gonflable au moyen de volets (21) qui sont thermosoudés auxdits bords intérieurs, lesdits éléments transversaux de secteur (20) étant cousus sur lesdits volets (21).

7. Système selon une ou plusieurs des revendications précédentes, **caractérisé en ce que** ledit support intérieur (11) est fixé sur ledit déflecteur rigide (5) au moyen de pattes latérales métalliques (12).

8. Système selon la revendication 1, **caractérisé en ce que** ladite partie gonflable et rétractable est constituée d'une feuille de PVC dont la surface extérieure dirigée vers l'extérieur du véhicule est lisse.
